# EUROPÄISCHE PATENTSCHRIFT

(11) **EP 0 585 713 B1**
(45) Veröffentlichungstag und Bekanntmachung des Hinweises auf die Patenterteilung: **30.10.1996**
(21) Anmeldenummer: 93113113.0
(22) Anmeldetag: 16.08.1993
(51) Int. Cl.: B23H 7/06, B23H 7/10

(54) **Elektroerosions-Schneidvorrichtung und -verfahren**
Method and apparatus for electroerosion cutting
Dispositif et procédé pour le découpage par électroérosion

(30) Priorität: 26.08.1992 DE 4228330
(43) Veröffentlichungstag der Anmeldung: 09.03.1994
(73) Patentinhaber: AG für industrielle Elektronik AGIE Losone bei Locarno, CH-6616 Losone/Locarno (CH)
(72) Erfinder: Derighetti, René, Dr., CH-6616 Losone (CH)
(74) Vertreter: Turi, Michael, Dipl.-Phys.

(56) Entgegenhaltungen:
- EP-A- 0 043 673
- EP-A- 0 348 534
- CH-A- 655 884
- FR-A- 2 342 121
- PATENT ABSTRACTS OF JAPAN vol. 7, no. 106 (M-213)(1251) 10. Mai 1983 & JP-A-58 028 424 (FUJITSU FANUC K.K.) 19. Februar 1983

## Beschreibung

Die Erfindung betrifft eine Vorrichtung bzw ein Verfahren zum elektroerosiven Schneiden nach dem Oberbegriff des Patentanspruchs 1 bzw. dem Oberbegriff des Patentanspruchs 13.

Elektroerosions-Schneidvorrichtungen und Elektroerosions-Schneidverfahren sind in den vielfältigsten Ausführungsformen bekannt. Eine Elekcroerosions-Schneidvorrichtung weist üblicherweise folgende Grundelemente auf: ein Maschinengestell mit Antrieben und Drahtsystem, ein Spülsystem, einen Generator sowie eine NC- oder CNC-Rechnersteuerung. Ausgehend von einer Startbohrung oder einer Referenzfläche wird mit einer ersten Elextrode - dem Erodierdraht - eine Kontur in bzw. aus einer zweiten Elektrode - dem Werkstück - geschnitten.

Ein Problem besonderer Art besteht beim elektroerosiven Schneiden in der Entwicklung von Drahtführungen, die für konische Schnitte geeignet sind. Dies gilt insbesondere für Drahtführungen, die in fixen Bearbeitungs- oder Führungsköpfen angeordnet sind. Für das Schneiden von Winkeln zwisehen 0 und 45° haben sich hier klare Grenzen gezeigt. Bei Drahtführungen in sogenannten Schwenkköpfen wie beispielsweise in der CH 655884 A5 offenbart, treten diese Probleme weniger stark auf.

Aus der gattungsbildenden FR-A 23 42 121 ist eine Funkenerosionsmaschine bekannt, die den Erodierdraht in zwei V-Führungen führt, welche oberhalb des Werkstücks um die Längsachse des Erodierdrahts drehbar angeordnet sind. Oberhalb der oberen V-Führung sowie unterhalb der unteren V-Führung sind Elektroden zum Zwecke der Stromversorgung angeordnet. Die EP-A 0 043 673 zeigt eine Funkenerosionsmaschine mit Hilfsdrahtzuführvorrichtung, mit deren Hilfe ein gerissener Erodierdraht in Rückwärtsrichtung bewegt werden kann. Schließlich zeigt noch die EP-A 0 348 534 zwei zueinander versetzte, drehbare V-förmige Führungen.

Die Erfindung zielt darauf ab, das elektroerosive Schneiden konischer Konturen weiterzuentwickeln.

Dieses Ziel erreicht die Erfindung durch die Gegenstände der Ansprüche 1 und 13.

Hierdurch wird folgendes erfindungsgemäß realisiert: eine Kombination von jeweils zwei Führungen (Drahtführung und Hilfsführung) beidseits des zu schneidenden Werkstückes (insgesamt sind somit vier Führungen vorgesehen). Der Draht durchläuft z.B. zunächst die etwas weiter von der Drehachse des Zylinders (auch Zentralachse oder Zentrum genannt) entfernt liegende (z.B: weiter oben) Hilfsführung (die z.B. ebenfalls eine V-Führung sein kann) und dann die näher beim Zentrum des Zylinders liegende Führung. Die damit verbundene Vorspannung des Drahtes gewährleistet eine hohe Präzision auch bei sehr kleinen Konikwinkeln. Der Versatz der Hilfsführung gegenüber der Drahtführung bestimmt dabei maßgeblich die Kraft, mit welcher der Draht auf die Drahtführung gedrückt wird; bei kleinen Konikwinkeln allein. Es gibt keinen kritischen Winkel mit einem Nulldruck auf den Draht.

Mit Hilfe des erfindungsgemäßen Verfahrens können auch große Konikwinkel ohne eine Toroidführung problemlos geschnitten werden. Der CNC-Steuerungsrechner bestimmt nach einem geeigneten Algorithmus in Abhängigkeit der Schnittparameter (beispielsweise Vorschubgeschwindigkeit, Vorschubrichtung usw.) die optimale Drehbewegung (insbesondere Größe und Geschwindigkeit der durchzuführenden Drehbewegung).

Bei einem weiteren bevorzugten Ausführungsbeispiel der Erfindung ist wenigstens eine der Drahtführungen dadurch drehbar, daß sie in einem drehbaren, insbesondere zylindrischen Bearbeitungskopf angeordnet ist (Anspruch 2). Der drehbare zylindrische Bearbeitungskopf dreht die in sainem Inneren befestigte Drahtführung mit und bietet so die Möglichkeit einer unkomplizierten Realisierung der Drehbarkeit der Drahtführung(en) (beispielsweise auch incl. Hilfsführungen).

Eine besonders bevorzugte Variante der Erfindung weist wenigstens einen an einen Steuerungsrechner angeschlossenen Motorantrieb zum automatischen Drehen der Drahtführung(en) bzw. des Bearbeitungskopfes auf (Anspruch 4). Der Motorantrieb weist i.A. ein Getriebe auf und ist vom Steuerungsrechner z.B. über einen Decoder steuerbar. Mit dem an den Steuerungsrechner (CNC) angeschlossenen Motor ergibt sich die Möglichkeit, die Drahtführungen vollautomatisch entsprechend der einzuhaltenen Schnittrichtungen zu drehen. Vorteilhaft kann ein Motorantrieb in einem oberen und ein weiterer Motorantrieb in einem unteren Maschinenarm vorgesehen sein. Die Istposition wird beispielsweise mit einem Drehgeber kleiner Auflösung und Nullsignal kontrolliert. Die Nullpunktsuche kann analog zur Nullpunktsuche der UV-Achsen durchgeführt werden.

Bei einer weiteren bevorzugten Ausführungsform der Erfindung ist an den Steuerungsrechner ein Drahtlagesensor angeschlossen (Anspruch 5). Der Drahtlagesensor - beispielsweise von der Firma AGIE bekannt - ermöglicht es, die erosive Schnittgeschwindigkeit ohne Genauigkeitsverlust zu steigern. Der Einsatz eines derartigen Drahtlagesensors ist somit auch bei drehbaren Drahtführungen äußerst vorteilhaft.

Eine weitere Variante der Erfindung weist wenigstens eine an die drehbare Drahtführung gekoppelte Einfädel-Einrichtung mit einer Aussparung und einem Verschluß auf (Anspruch 6). Durch die Kopplung der Einfädel-Einrichtung an die drehbare Drahtführung ist es möglich, auch bei drehbar ausgelegten Drahtführungen ein automatisches Drahteinfädeln in das zu schneidende Werkstück zu gewährleisten. Wäre die Einfädel-Einrichtung nicht drehbar, könnte ein genügend großer Konikwinkel beim Schneiden kaum erreicht werden, da die Mündungsöffnung der Einfädeldüse bzw. -öffnung dann zu breit ausgelegt werden müßte. Hier schafft die Kombination aus Drehbarkeit und Verschluß eine gute Lösung.

Die Aussparung der Einfädelungsdüse kann alternativ auch durch andere Mittel als den Verschluß geschlossen werden (z.B. elastische Verformung'') . Die elastische Verformung übernimmt dann quasi die Funktion des Veschlusses.

Bei einer anderen besonders bevorzugten Weiterbildung der Erfindung ist die Querschnittskontur der Drahtführung in Richtung der Drahtführung progressiv gekrümmt (Anspruch 7). Die überraschende Tatsache einer sich verändernden Krümmung der Drahtführung wird den unterschiedlich großen Zugspannungen auf die Drahtelektrode bei verschieden großen Konikwinkeln gerecht. Zu kleine Krümmungen führen zu einer plastischen Verformung des Drahtes und sind zu vermeiden.

Ausgehend von der Grundidee, durch Drehungen einer oder mehrerer Drahtführungen, hier durch Drehungen der mit den Drahtführungen verbundenen Bearbeitungsköpfe, um den Erodierdraht das konische Schneiden weiterzuentwickeln, werden auch die Vorteile folgender Lehre deutlich: eine Einfädel-Einrichtung für eine Elektroerosions-Schneidevorrichtung ist starr mit einem die Drahtführung aufnehmenden drehbaren Bearbeitungskopf der Elektroerosions-Schneidevorrichtung verbunden. Hierdurch wird sichergestellt, daß eine einmal optimal eingestellte Lagebeziehung zwischen der Drahtführung und der Einfädelvorrichtung trotz späterer Drehung der Drahtführung nicht verloren geht. Besonders bevorzugt weist die Einfädel-Einrichtung dabei eine verschließbare Druckkammer auf (Anspruch 8 und 9).

Eine weitere Lehre, die durch die drehbaren Drahtführungen besonders sinnvoll wird, besteht in einer Drahtführung für eine Elektroerosions-Schneidevorrichtung, insbesondere einer offenen V-Führung, mit einer Querschnittskontur mit einer sich verändernden Krümmung (Anspruch 10). Besonders vorteilhafte Ausgestaltungen dieses Gedankens ergeben sich z.B. mit einer Krümmung in Parabelform oder einer Krümmung nach Art zweier überlagerter Kreise (Anspruch 12).

Besonders vorteilhaft werden die Drehung und die Position der Drahtführung(en) relativ zum Koordinatennullpunkt anhand der aus einem vorprogrammierten Konikwinkel bestimmten UV-Achsen-Sollposition ermittelt (Anspruch 14). Entsprechend dem anzufahrenden Sollpunkt kann eine Drehbewegung dann leicht bestimmt werden.

Alternativ werden die Drehung und die Position der Drahtführung relativ zum Koordinatennullpunkt bei einer weiteren Variante der Erfindung analog zu den UV-Achsen-Sollpositionen aus dem vorgegebenen Konikwinkel ermittelt (Anspruch 15). Das bekannte Verfahren zum Ermitteln der UV-AchsenSollpositionen braucht dazu nur geringfügig verändert zu werden.

Schließlich ist es besonders vorteilhaft, wenn die Drehung der Drahtführung um den Erodierdraht mit einer inkrementalen beschränkten Korrektur der Richtung bestimmt wird, um unnötig schnelle Drehbewegungen zu vermeiden (Anspruch 16). Unnötig schnelle Drehbewegungen könnten bei hochpräzisen Schnitten unerwünscht sein. Dem kann erfindungsgemäß auf umkomplizierte Weise dadurch Rechnung getragen werden, daß die Drehung in inkrementalen bzw. kleinen Schritten ausgeführt wird. Wird z.B. die Schnittrichtung gewechselt (beispielsweise beim Schneiden einer Ecke von 90° und einem Konikwinkel von 30°), braucht die 90°-Drehung der Drahtführungen nicht in einer plötzlichen Drehbewegung durchgeführt werden, sondern sie kann bereits kurz vor Erreichen des Eckpunktes eingeleitet und beim Durchfahren der Ecke in kleinen Schritten durchgeführt werden. Kleine Abweichungen der Richtung der V-Führung gegenüber dem idealen Winkel haben einen wesentlichen Einfluß auf die Genauigkeit.

Nach einer bevorzugten Weiterbildung des erfindungsgemäßen Verfahrens werden in die Drehung und die Position der Drahtführung relativ zum Koordinatennullpunkt vorgespeicherte individuelle Fertigungs- und/oder Montageparameter einbezogen (Anspruch 17). Damit ergibt sich eine hochgenaue Anpassung der Erfindung an die jeweilige Maschine. Ungenauigkeiten bei der Realisierung der zusätzlichen Bewegung werden auf einfache Weise kompensiert. Besonders bei hochpräzisen Anlagen ist es vorteilhaft, wenn in Funktion des Winkels eine derartige Korrektur (Maschinenkorrektur) der Lage des Drahtes berechnet wird.

Schließlich wird bei einer weiteren bevorzugten Variante der Erfindung eine absolute Messung der Istposition der Drahtführung(en) durchgeführt (Anspruch 18). Mit einer absoluten Messung - beispielsweise in Bezug auf einen Maschinenpunkt - kann eine beschränkte Genauigkeit bei deutlicher Kostensenkung realisiert werden. Dies ist besonders bei preisgünstigen Maschinen mit einem eingeschränkten Anforderungsprofil vorteilhaft.

Bei einer anderen Variante der Erfindung wird eine elektronische Korrektur auftretender Lagefehler in Abhängigkeit des Winkels und des Profils der Führung durchgeführt (Anspruch 19). Diese überraschende Variante ist besonders bei Verwendung einer Führung mit einer veränderlichen Krümmung sinnvoll.

Schließlich wird bei einer besonders bevorzugten Ausführungsform der Erfindung die offene Drahtführung beim Schneiden in wenigstens drei verschiedenen Bereichen wie folgt gedreht: a) in einem ersten Bereich nur in inkrementalen Korrekturschritten, in einem zweiten Bereich in einem Winkel von ca. 90° zur Drehachse, und in einem dritten Bereich im wesentlichen gegen die Drehachse (Anspruch 20). Diese Kombination verschiedener "Drehstrategien" wird den besonderen Bedingungen in den einzelnen Schnittbereichen besonders gerecht. Inbesondere werden schnelle und unnötige Drehungen bei kleinen Abweichungen vom "Zentrum" (d.h. bei kleinen Konikwinkeln) vermieden.

Weitere bevorzugte Merkmale der Erfindung ergeben sich aus der nachfolgenden Beschreibung bevorzugter Ausführungsbeispiele. Diese Ausführungsbeispiele sind schematisch in der beigefügten Zeichnung dargestellt, die auch den Unterschied zwischen erfindungsgemäßen Vorrichtungen und dem bereits geschilderten Stand der Technik veranschaulicht.

In der Zeichnung zeigen:
- Fig. 1: eine schematische Ansicht verschiedener Komponenten einer erfindungsgemäßen Elektroerosions-Schneidvorrichtung;
- Fig. 2: eine schematische Ansicht verschiedener Komponenten eines zweiten Ausführungsbeispiels einer erfindungsgemäßen Elektroerosions-Schneidvorrichtung;
- Fig. 3: eine schematische Ansicht verschiedener Komponenten eines dritten Ausführungsbeispiels einer erElektroerosions-Schneidvorrichtung;
- Fig. 4: eine schematische Ansicht verschiedener Komponenten eines vierten Ausführungsbeispiels einer erfindungsgemäßen Elektroerosions-Schneidvorrichtung;
- Fig. 5: eine schematische Veranschaulichung eines erfindungsgemäßen Schnittverfahrens;
- Fig. 6a: eine schematische Ansicht der Querschnittskontur einer erfindungsgemäßen Drahtführung;
- Fig. 6b: eine schematische Ansicht der Querschnittskontur eines weiteren Ausführungsbeispiels einer erfindungsgemäßen Drahtführung.

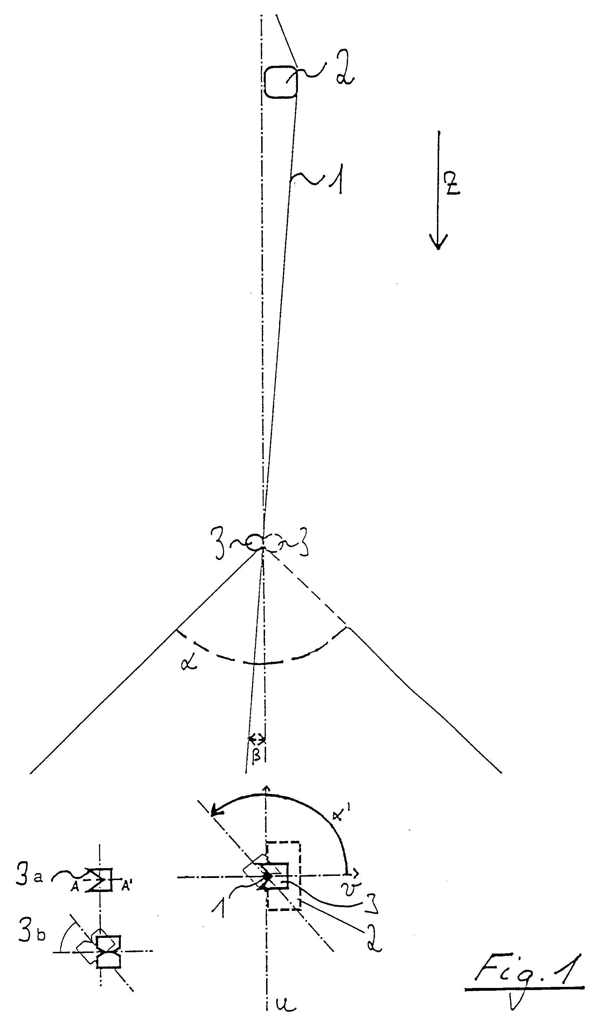

Zunächst sei das erste Ausführungsbeispiel der Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Maschinen üblicher Arbeitsaufstellung und Größe sowie auf in üblicher Weise angeordnete Werkstücke.

Fig. 1 beschränkt sich auf eine rein schematische Darstellung erfindungswesentlicher Teile einer erfindungsgemäßen Elektroerosions-Schneidvorrichtung. Grundelemente wie Maschinengestell mit Antrieben und Drahtsystem, Spülsystem, Generator sowie eine CNC-Rechnersteuerung sind nicht dargestellt, da sie als selbstverständlich gelten. Ein Erodierdraht 1 wird in der durch einen Pfeil Z dargestellten Drahttransportrichtung von "oben" nach "unten" vorgespult. Eine erste Stromzuführung 2 dient in üblicher Weise zur Zuführung der vom (nicht dargestelltem) Generator der Elektroerosions-Schneidvorrichtung abgegebenen elektrischen Impulse. In Bezug auf die Drahtvorspulrichtung Z ist hinter der Stromzuführung 2 eine offene Drahtführung 3 drehbar angeordnet. Die Drehbarkeit der Drahtführung wird durch eine doppelte Darstellung der Drahtführung 3 veranschaulicht (durchgezogene Darstellung 3 und gestrichelte Darstellung: um 180° gedreht). In der im oberen Teil der Zeichnung dargestellten Seitenansicht ist ein kreisförmiges Querschnittsprofil der Drahtführung 3 zu erkennen.

In der linken unteren Ecke der Fig. 1 sind zwei verschiedene Varianten offener Drahtführungen dargestellt: eine Führung 3a mit einer relativ zum Erodierdraht größeren V-Öffnung (einteilig aus einem Stück geschliffen) und eine aus zwei geschliffenen Teilen zusammengesetzte Führung 3b mit einer kleineren V-Öffnung.

Die Führung 3 ist so angeordnet, daß der Draht in seiner Ruhelage so tief wie möglich im V der Führungen einliegt. Die in dieser "Ruhelage" durch den Mittelpunkt des Erodierdrahtes verlaufende Senkrechte in der Z-Richtung der Maschine ist die Drehachse der Drahtführungen - auch Zentralachse, oder kürzer Zentrum, genannt.

Soll ein zur Zentralachse geneigter Schnitt (in Fig. 1 mit einem Neigungswinkel α), oder kürzer ein konischer Schnitt zum Zentrum durchgeführt werden, muß - neben der notwendigen Verschiebung der Drahtführung(en) 3 in UV- (und/oder XY-) Richtung zum Erzielen der Schrägstellung des Erodierdrahtes 1 - lediglich die Drahtführung 3 derart um das Zentrum gedreht werden, daß der Draht 1 gegen den Grund des V's der Führung "drückt" (bzw. derart, das sich der Erodierdraht 1 in die Richtung des Konikschnittes um die Führung 3 legt). Die Drehbewegung ist zwar im Prinzip unabhängig von der Größe des Konikwinkels, dennoch ist es nach einer später noch zu erläuternden überraschenden Variante der Erfindung vorteilhaft, auch die Größe des Konikwinkels in die Größe des Drehwinkels der Drahtführung (in der UV- und/oder XY-Ebene) mit einzubeziehen.

Die Drehbewegung wird in der Draufsicht im mittleren unteren Teil der Fig. 1 besonders anschaulich. Die dargestellte Drahtführung 3 liegt analog zum oberen Teil der Zeichnung in Drahttransportrichtung unter der Stromzuführung 2 (gestrichelt). Die in diesem Teil der Zeichnung durch einen dickeren Strich dargestellte Lage des Erodierdrahtes 1 sei definitionsgemäß die 0°-Lage der Drehung der Drahtführung 3 in der UV-Ebene. Durch einen dünneren Strich ist die um einen Winkel α' gedrehte Drahtführung 3 dargestellt. Im Bezug auf die 0°-Lage entspricht dies ungefähr einem konischen Schnitt in die -135°-Richtung (mit einem dazu senkrechten Konikwinkel zwischen 0 und 90°).

Dabei gilt jedoch folgende Besonderheit: Da der Erodierdraht 1 in Fig. 1 um die Stromzuführung 2 gelegt ist, besitzt er in der darunter befindlichen Drahtführung 3 keine Vorspannung, wenn der zu schneidende Konikwinkel genau einem kritischen Winkels β entspricht. Dieser Winkel ergibt sich - in Richtung "-u" - zwischen der Zentralachse und der Drahtrichtung zwischen dem Drahtmittelpunkt in der Drahtführung 3 und dem Drahtmittelpunkt auf der Höhe der Stromzuführung 2. Bei diesem kritischen Winkel ist in keiner Drehrichtung der Führung 3 ein Anlagedruck des Erodierdrahtes 1 auf die Führung 3 vorhanden.

Mit einer überraschenden Weiterentwicklung der Erfindung kann dieser Effekt vermieden werden. Nach Fig. 2 ist vor der Drahtführung 3 eine weitere drehbare Hilfsführung 4 vorgesehen. Diese Draht-Hilfsführung 4 hat einen größeren Abstand vom Werkstück als die Drahtführung 3 und sorgt in allen Lagen für eine "Vorspannung" des Drahtes im Bezug auf die Drahtführung 3 (der Erodierdraht 1 legt sich stets etwas um die Führung 3). Damit ist jeder (übliche) Konikwinkel in jeder Richtung exakt schneidbar - auch ein sehr kleiner. Bei sehr kleinen Konikwinkeln ist eine Drehung der Drahtführung(en) 3, 4 u.U. gar nicht erforderlich! Der Erodiedraht 1 liegt auf der -dem Zentrum abgewandten Seite der Hilfsführung 4. Außerdem ist die Hilfsführung 4 derart zwischen der Stromzuführung 2 und der werkstücknahen Drahtführung 3 angeordnet bzw. von dieser und dem Zentrum beabstandet, daß in jeder Drehrichtung eine Vorspannug des Erodierdrahtes 1 im Bezug auf die werkstücknahe Führung 3 besteht. Der Maßstab der Zeichnung ist natürlich rein anschaulich zu verstehen.

Die Versetzung der werkstückfernen Hilfsführung 4 gegenüber der werkstücknahen Drahtführung 3 bestimmt maßgeblich die Kraft, mit welcher der Draht 1 auf die werkstücknahe Drahtführung 3 gedrückt wird. Es gibt keinen kritischen Winkel mit einem Nulldruck auf den Draht.

Die untere Drahtführung 3 ist derart angeordnet, daß der in ihr einliegende Draht 1 mit seinem Mittelpunkt genau auf der Drehachse der Drahtführung 3 liegt. Dies ist jedoch nur für einen bestimmten Drahtdurchmesser gültig. Bei anderen Drahtdurchmessern liegt der Draht mit seinem Mittelpunkt nicht mehr auf der Drehachse. Der Draht wird dann bei einer Drehung der Drahtführung zwar auf einem Kreis mitgedreht, in sich aber nicht gedreht oder verdrillt. Im Prinzip ist es möglich, die untere Drahtführung 3 entsprechend dem Durchmesser des jeweils verwendeten Erodierdrahtes so zu verschieben, daß Drahtmittelpunkt und Drehachse aufeinanderfallen. Nach einer besonders vorteilhaften Variante der Erfindung wird jedoch eine automatische elektronische Lagekorrektur berechnet oder mit einem Drahtlagesensor ermittelt.

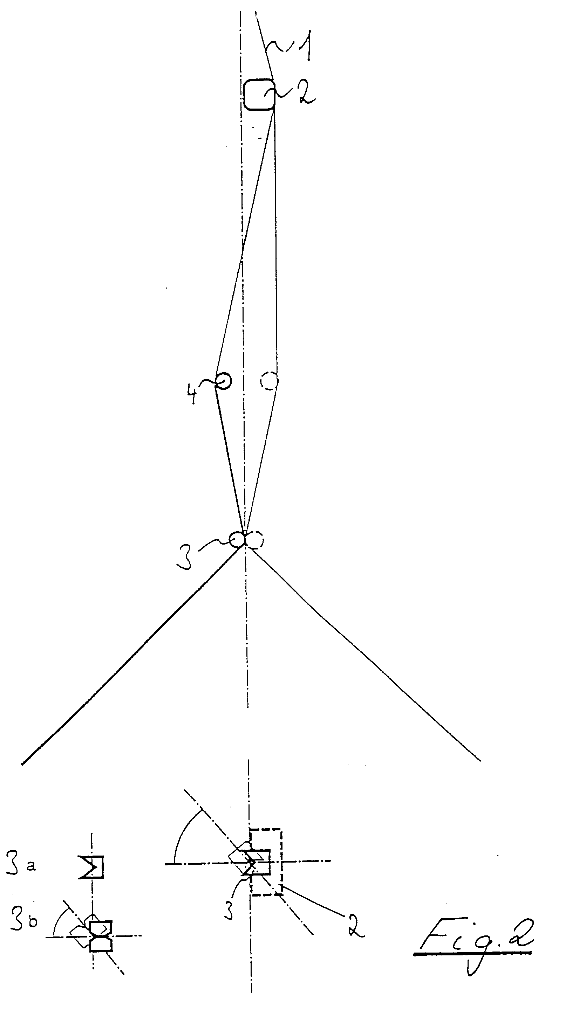

Mit dem Ermitteln dieser Lagekorrektur - entsprechend dem Drahtdurchmesser - wird noch eine weitere interessante Variante der Erfindung realisierbar: In Fig. 3 ist die untere Drahtführung 3 nicht mehr derart angeordnet, daß der Mittelpunkt des Drahtes 1 und die Drehachse übereinstimmen. Vielmehr beschreibt der Mittelpunkt der Erodierdrahtes 1 bei einer vollen Drehung der Drahtführung 3 (um 360°) einen kleinen Kreis um die Drehachse. Diese Variante der Erfindung schafft Platz, der beispielsweise zur Unterbringung einer Einfädel-Einrichtung nutzbar ist.

Fig. 4 zeigt eine mehr konstruktiv ausgerichtete Darstellung eines weiteren Ausführungsbeispiels der Erfindung.

Die zwei Drahtführungen 3, 4 sind gemeinsam im Innern eines drehbaren Hohlzylinders (bzw. allgemeiner: "Bearbeitungs- oder Führungskopf") 5 befestigt. Die Drehbarkeit des Hohlzylinders 5 gewährleistet somit die Drehbarkeit der Drahtführungen 3, 4.

Der Hohlzylinder 5 ist von einem Ring 6 umgeben, der an seinem äußeren Radius eine Verzahnung 7 aufweist. In die Verzahnung 7 des Ringes 6 greift ein Getriebe 8 ein, daß von einem Motor 9 antreibbar ist. Der Motor 9 kann über einen Decoder 10 bedient bzw. gesteuert werden. Als Motor 9 kann ein Schrittmotor oder - falls ein entsprechender Regelkreis vorgesehen ist - ein Gleichstrommotor verwendet werden. Der Decoder 10 ist an einen - nicht dargestellten - CNC-Steuerungsrechner der Elektroerosions-Schneidvorrichtung angeschlossen, was eine völlige Automatisierung der Drehbewegungen erlaubt.

Zusammenfassend betrachtet ist der apparative Bedarf zur Realisierung der Erfindung erstaunlich gering im Vergleich zu den mit der Maschine realisierbaren Möglichkeiten. Im unteren Teil der Fig. 4 wird in einer Draufsicht der unkomplizierte Aufbau des Bearbeitungskopfes 5 besondeutlich. Das Einfädeln des Erodierdrahtes um die Drahtführungen 3, 4 herum kann entweder von Hand erfolgen oder aber z.B. durch ein Verfahren der Drahtführungen 3, 4 im Bearbeitungskopf 5 in radialer Richtung, etwa derart, daß die beiden Drahtführungen in vertikaler Richtung miteinander fluchten (die Verfahrbarkeit ist in Fig. 4 nicht dargestellt).

Die Lage der drehbaren Drahtführung(en) innerhalb der UV- (und/oder XY-) Ebene oder einer hierzu parallelen Fläche - also die Lage der Rotationsachse(n) kann über einen am Bearbeitungskopf 5 befestigten Maschinenarm 11 verstellt werden.

An den Bearbeitungskopf 5 ist weiterhin eine erfindungsgemäße Einfädel-Einrichtung 12 zum Einfädeln des Erodierdrahtes 1 in ein (in Drahtvorspulrichtung) darunterliegendes (nicht dargestelltes) Werkstück gekoppelt. Die (hier weitgehend zylindrische) Einfädel-Einrichtung 12 besteht aus einem zentralen Röhrchen 13, das kurz unterhalb der unteren Drahtführung 3 ansetzt. Weiterhin weist die Einfädel-Einrichtung 12 eine rund um das Röhrchen 13 verlaufende Kammer 15 auf. Die Kammer 15 endet in einer rund um das untere Ende des Röhrchens 13 herum verlaufenden Mündung 14. Die Einfädelvorrichtung hat die Form eines nicht ringsum geschlossenen Zylinders mit einer schlitzartigen Aussparung 16, die von der inneren Wandung des Röhrchens 13 in radialer Richtung bis zur äußeren Wandung der EinfädelEinrichtung 12 verläuft. Ein Verschluß 17 kann paßgenau in die Aussparung 16 gesetzt werden. Ist der Verschluß 17 in die Aussparung 16 eingesetzt, sind sowohl die Druckkammer als auch das Röhrchen 13 in radialer Richtung ringsum geschlossen. Ein im Röhrchen 13 liegender Erodierdraht kann daher nicht mehr aus dem Röhrchen radial nach außen treten. In der Kammer 15 kann z.B. mittels einer Flüssigkeit - beispielsweise dem bei der Erosion verwendeten Dielektrikum - Druck aufgebaut werden. Dieser Druck führt dazu, daß die Flüssigkeit aus der Kammer 15 durch die Öffnung 14 i.w. axial nach unten schießt. Wird jetzt der Draht nach unten vorgeschoben, wird er vom austretenden strahl ergriffen und mitgeführt, beispielsweise in eine Startbohrung des zu bearbeitenden Werkstückes.

Nach dem erfolgten Einfädeln wird der Verschluß 17 (so weit wie nötig) radial aus der Aussparung 16 nach außen gezogen. Der Erodierdraht kann jetzt zum konischen Schneiden in der Aussparung 16 durch Verfahren der oberhalb und unterhalb des zu schneidenden Werkstückes liegenden Führungen geschwenkt werden. Da die Einfädel-Einrichtung 12 an den Bearbeitungskopf 5 gekoppelt ist, wird sie bei Drehungen des Bearbeitungskopfes 5 stets automatisch mitgedreht. Der Erodierdraht läuft daher bei konischen Schnitten (aber auch bei Schnittrichtungswechseln aller Art) automatisch "richtig" in der Aussparung 16 (Insofern ist auch die dünn gezeichnete - um 180° gedrehte - Lage des Erodierdrahtes derart zu interpretieren, daß die Einfädel-Einrichtung bei diesem Schnitt ebenfalls um 180° mitgedreht würde (Diese Tatsache wurde lediglich aus anschaulichen Gründen in Fig. 4 nicht berücksichtigt).

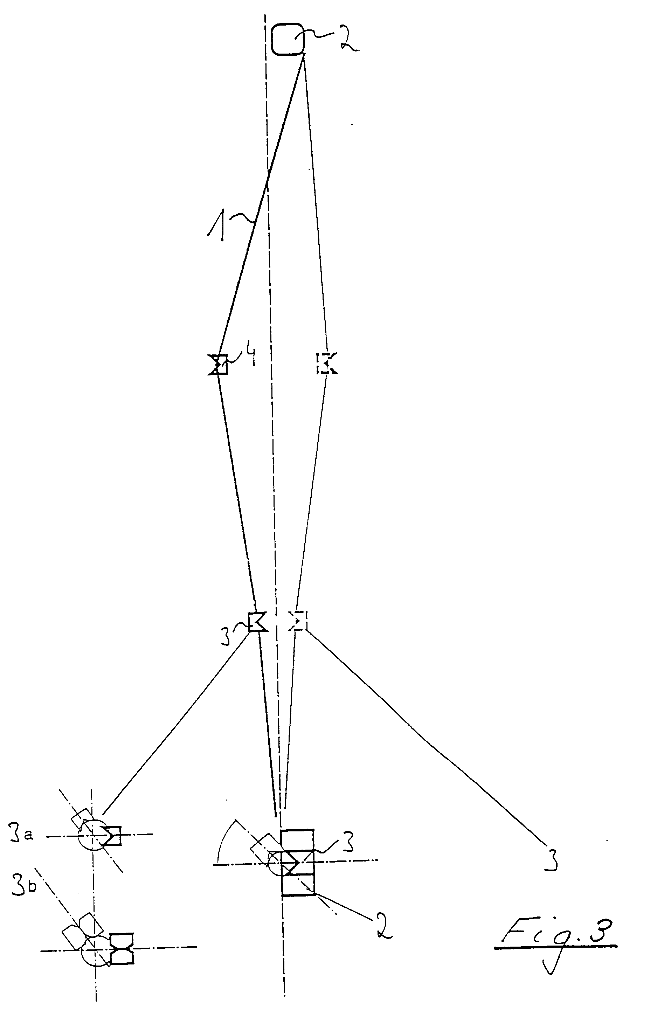

Insbesondere mit den in Fig. 2, 3 und 4 dargestellten Ausführungsbeispielen ist die originelle Schnittstrategie der Fig. 5 durchführbar. In einer inneren Zone (ZONE Z1) - rund um die Drehachse herum - ist es bei leichten konischen Schnitten (mit einem geringen Neigungswinkel) möglich, die Drahtführung(en) zunächst gar nicht zu drehen. In einem Übergangsbereich (ZONE Z2) wird dann versucht, die Drahtführung(en) 3 derart zu drehen, daß sie möglichst in einem Winkel von (maximal) ca. 90° zur "optimalen" Lage steht. Außen (ZONE Z3) wird die Führung 3 dann soweit wie möglich "optimal" ausgerichtet, d.h. so, daß die Öffnung des V zur Drehachse zeigt. Diese Schnittstrategie vermeidet überschnelle Drehungen in den inneren ZONEN Z1, Z2. Je nach Wunsch kann natürlich auch eine mehr oder weniger von der optimalen Drehposition abweichende Drehung der Drahtführung realisiert werden (siehe linke untere Ecke der Fig. 5). Die Anzahl der Zonen sowie die entsprechenden maximalen Abweichungen von der optimalen Drehposition können - je nach Schnitterfordernis - beliebig erhöht werden.

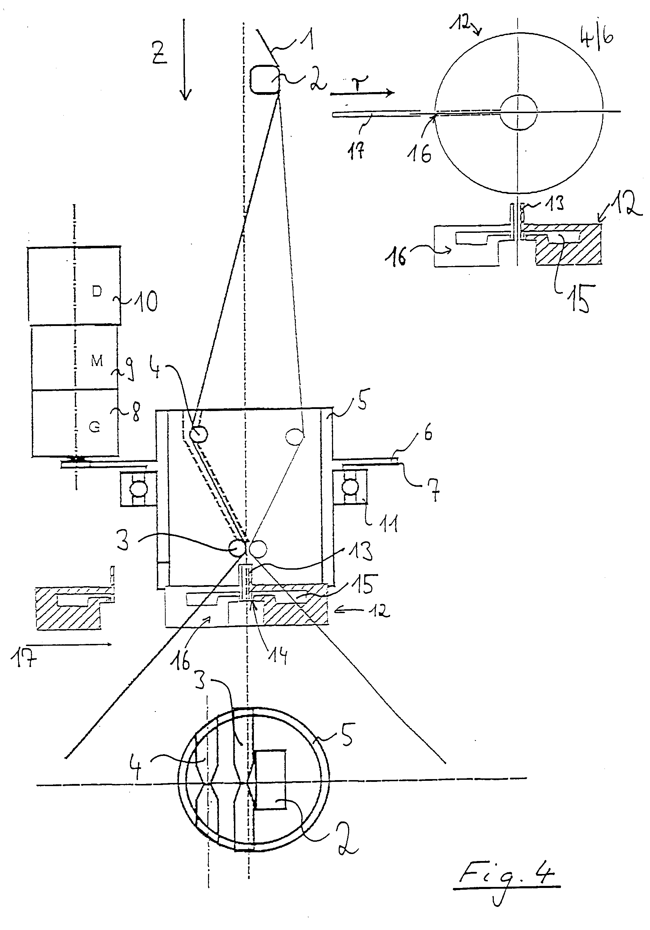

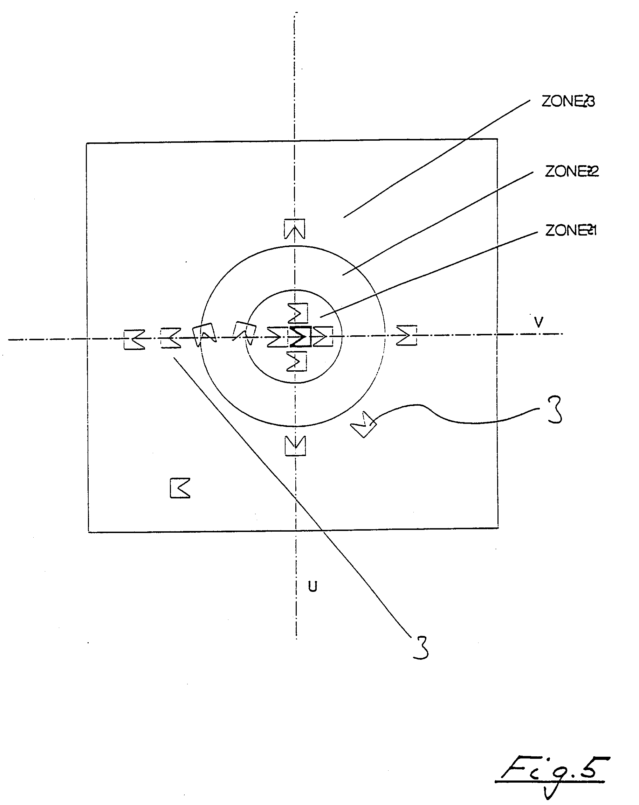

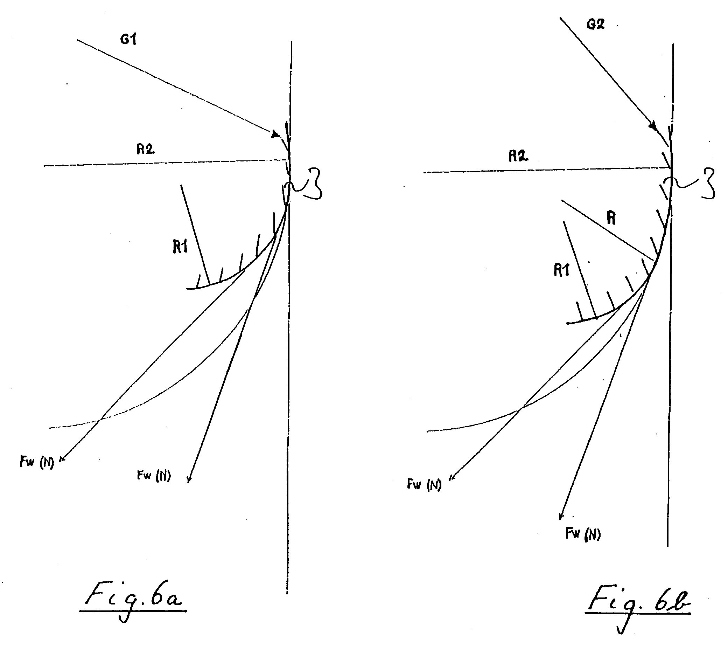

In Fig. 6a und 6b sind schließlich Drahtführungen mit einer besonders vorteilhaften Querschnittskontur (entsprechend einem Schnitt A-A' in Fig. 1) dargestellt. Nach dieser Idee ist es bei Verwendung von drehbaren V-Führungen für konische Schnitte günstig, die Drahtführungen im Querschnitt nicht (halb-)kreisrund zu gestalten, sondern ihnen eine sich verändernde Krümmung zu geben (bzw. den dazu reziproke Radius zu variieren). Die sich verändernde Krümmung des Querschnittprofils kann beispielsweise einer Parabelform entsprechen oder - einfacher - aus zwei oder mehr überlagerten Kreisabschnitten mit verschiedenen Radius gebildet sein. Die progressive, nach unten zunehmende Krümmung entspricht folgender Erkenntnis: Mit großen Schnittwinkeln beim konischen Schneiden sinkt i.A. auch die Höhe der Werkstücke, so daß die Drahtspannung (siehe die analogen Vektoren F_{w}(N) kleiner gehalten werden kann. Daher ist auch die Verformung des Drahtes kleiner, so daß der Draht auch stärkeren Krümmungen ausgesetzt werden kann. Die progressive Krümmung ist der "Werkstückhöhe" und der damit verbundenen Drahtspannung auf (apparativ) einfache Weise gut angepaßt. Es wird eine Drahtführung 3 kleiner Dimension verwirklicht, die dennoch plastische Drahtverformungen aufgrund zu kleiner Krümmungsradien bei kleinen Konikwinkeln und hohen Belastungen weitgehend vermeidet. Fig. 6a zeigt ein Ausführungsbeispiel einer Drahtführung 3, deren Querschnittsprofil im Drahtanlagebereich durch eine Überlagerung zweier Kreise mit den Radien R1 und R2 realisiert wurde. Dagegen wurden im Ausführungsbeispiel der Fig. 6b drei Kreisabschnitte (R1, R, R2) überlagert. Die Querschnittskontur der Drahtführung 3 kann in der CNC abgespeichert und durch eine entsprechende Software automatisch bei der Berechnung der Sollvorgaben für konische Schnitte berücksichtigt werden.

Die Drahtführungen 3 mit progressiv in Richtung auf das Werkstück zunehmender Krümmung sind derart in die Funkenerosionsvorrichtung eingebaut, daß der Draht sie bei größeren zu schneidenden Konikwinkeln unter einer größeren Krümmung verläßt.

## Patentansprüche

1. Vorrichtung zum elektroerosiven Schneiden eines Werkstückes mit einem in wenigstens zwei gegeneinander verschiebbaren offenen V-förmigen Drahtführungen (3) geführten Erodierdraht (1), wobei - in Drahtvorschubrichtung gesehen - die eine Drahtführung (3) vor und die andere Drahtführung (3) hinter dem Werkstück angeordnet ist, wenigstens eine der Drahtführungen (3) um die Längsachse des Erodierdrahtes (1) drehbar ist, und der Erodierdraht (1) vor dem Werkstück zunächst über eine Stromzuführung (2) und dann-in Drahtvorschubrichtung gesehen- über die offene V-förmige Drahtführung (3) geführt wird, dadurch gekennzeichnet, daß zwischen der Stromzuführung (2) und der offene V-förmigen Drahtführung (3) eine Hilfsführung (4) vorgesehen ist.

2. Vorrichtung nach Anspruch 1, dadurch gekennzeichnet, daß die Drahtführung (3) und die Hilfsführung (4) in vertikaler und horizontaler Richtung gegeneinander versetzt sind.

3. Vorrichtung nach Anspruch 1 oder 2, dadurch gekennzeichnet, daß wenigstens eine der Führungen (3;4) dadurch drehbar ist, daß sie in einem drehbaren, insbesondere zylindrischen Bearbeitungskopf (5) angeordnet ist.

4. Vorrichtung nach einem der Ansprüche 1 - 3, gekennzeichnet durch wenigstens einen an einen Steuerungsrechner angeschlossenen Motorantrieb (9) zum automatischen Drehen der Drahtführung(en) (3) bzw. des Bearbeitungskopfes (5).

5. Vorrichtung nach Anspruch 4, gekennzeichnet durch einen an den Steuerungsrechner angeschlossenen Drahtlagesensor.

6. Vorrichtung nach einem der Ansprüche 1 - 5, gekennzeichnet durch wenigstens eine an die drehbare Drahtführung gekoppelte Einfädeleinrichtung (12) mit einer Aussparung (16) und einem Verschluß (17).

7. Vorrichtung nach einem der Ansprüche 1 - 6, dadurch gekennzeichnet, daß die Querschnittskontur der Drahtführung (3) progressiv gekrümmt ist.

8. Vorrichtung nach einem der Ansprüche 1 - 7, dadurch gekennzeichnet, daß die Einfädeleinrichtung (12) starr an einen drehbaren Drahtführungskopf (5) gekoppelt ist.

9. Vorrichtung nach Anspruch 8, dadurch gekennzeichnet, daß die Einfädeleinrichtung (12) eine verschließbare Druckkammer (15) aufweist.

10. Vorrichtung nach einem der Ansprüche 1 - 9, dadurch gekennzeichnet, daß sich eine Querschnittskontur der Drahtführung (3) verändert,

11. Vorrichtung nach Anspruch 10, gekennzeichnet durch eine parabelförmige Krümmung der Querschnittskontur.

12. Vorrichtung nach Anspruch 10, dadurch gekennzeichnet, daß die Drahtführung (3) eine Krümmung nach Art zweier überlagerter Kreisabschnitte mit verschiedenen Radien hat.

13. Verfahren zum elektroerosiven schneiden mit einem in wenigstens zwei offenen V-förmigen Drahtführungen (3) geführten Erodierdraht (1), bei welchem wenigstens eine der Drahtführungen (3) während des erosiven Schneidens in Abhängigkeit einer zu schneidenden Kontur um die Längsachse des Erodierdrahtes (1) gedreht wird, dadurch gekennzeichnet, daß die wenigstens eine drehbare Drahtführung (3) und eine hierzu verschobene drehbare Hilfsführung (4) für den oberen und unteren Bearbeitungskopf (5) bei zylindrischen und konischen Schnitten derart gedreht werden, daß die Kraft, mit welcher der Draht in der Drahtführung (3) gehalten wird, maximal ist.

14. Verfahren nach Anspruch 13, dadurch gekennzeichnet, daß die Drehung und die Position der Drahtführung(en) relativ zum Koordinatennullpunkt anhand der aus einem vorprogrammierten Konikwinkel bestimmten UV-Achsen-Sollposition ermittelt werden.

15. Verfahren nach Anspruch 13, dadurch gekennzeichnet, daß die Drehung und die Position der Drahtführung relativ zum Koordinatennullpunkt anlog zu den UV-Achsen-Sollpositionen aus dem vorgegebenen Konikwinkel ermittelt werden.

16. Verfahren nach einem der Ansprüche 13 - 15, dadurch gekennzeichnet, daß die Drahtführung in inkremental beschränkten Korrekturstufen um den Erodierdraht gedreht wird, um unnötig schnelle Drehbewegungen zu vermeiden.

17. Verfahren nach einem der Ansprüche 13 - 16, dadurch gekennzeichnet, daß in die Berechnung der Drehung und der Position der Drahtführung relativ zum Koordinatennullpunkt vorgespeicherte individuelle Fertigungs- und/oder Montageparameter einbezogen werden.

18. Verfahren nach einem der Ansprüche 13 - 17, dadurch gekennzeichnet, daß eine absolute Messung der Istposition der Drahtführung(en) durchgeführt wird.

19. Verfahren nach einem der Ansprüche 13 - 18, dadurch gekennzeichnet, daß eine elektronische Korrektur auftretender Lagefehler in Abhängigkeit des Profils der Führung durchgeführt wird.

20. Verfahren nach einem der Ansprüche 13 - 19, dadurch gekennzeichnet, daß die offene Drahtführung beim konischen Schneiden in wenigstens drei verschiedenen Bereichen wie folgt gedreht wird:
a) in einem ersten Bereich (ZONE Z1) nur in inkrementalen Korrekturschritten,
b) in einem zweiten Bereich (ZONE Z2) um einen Winkel von ca. 90° zur Drehachse, und
c) in einem dritten Bereich (ZONE Z3) im wesentlichen gegen die Drehachse.

## Claims

1. Device for the cutting by electroerosion of a workpiece, having an eroding wire (1) guided in at least two open V-shaped wire guides (3) displaceable with respect to one another, one wire guide (3) being arranged in front of and the other wire guide (3) behind the workpiece viewed in the wire feed direction, at least one of the wire guides (3) being rotatable about the longitudinal axis of the eroding wire (1), and the eroding wire (1), viewed in the wire feed direction, being guided firstly via a power supply (2) and then through an open V-shaped wire guide (3), characterised in that an auxiliary guide (4) is provided between the power supply (2) and the open V-shaped wire guide (3).

2. Device according to Claim 1, characterised in that the wire guide (3) and the auxiliary guide (4) are offset with respect to one another in the vertical and horizontal direction.

3. Device according to Claim 1 or 2, characterised in that at least one of the guides (3; 4) is rotatable in that it is arranged in a rotatable, especially cylindrical machining head (5).

4. Device according to one of the Claims 1 - 3, characterised by at least one motor drive (9) connected to a control computer for the automatic rotation of the wire guide(s) (3) or of the machining head (5).

5. Device according to Claim 4, characterised by a wire position sensor connected to the control computer.

6. Device according to one of the Claims 1 - 5, characterised by at least one threading device (12) having a recess (16) and a closure( 17) and connected to the rotatable wire guide.

7. Device according to one of the Claims 1 - 6, characterised in that the cross-sectional contour of the wire guide (3) is progressively curved.

8. Device according to one of the Claims 1 - 7, characterised in that the threading device (12) is connected rigidly to a rotatable wire guide head (5).

9. Device according to Claim 8, characterised in that the threading device (12) has a lockable pressure chamber (15).

10. Device according to one of the Claims 1 - 9, characterized in that a cross-sectional contour of the wire guide (3) changes.

11. Device according to Claim 10, characterized by a parabolic curvature of the cross-sectional contour.

12. Device according to Claim 10, characterized in that the wire guide (3) has a curvature in the manner of two superimposed segments of circles with different radii.

13. Method for cutting by electroerosion having an eroding wire (1) guided in at least two open V-shaped wire guides (3), in which at least one of the wire guides (3) is rotated about the longitudinal axis of the eroding wire (1) during the cutting by erosion as a function of a contour to be cut, characterized in that at least the one rotatable wire guide (3) and a rotatable auxiliary guide (4) displaced with respect to the latter for the upper and lower machining head (5) are rotated during cylindrical and conical cuts in such a way that the force with which the wire is held in the wire guide (3) is maximum.

14. Method according to Claim 13, characterised in that the rotation and the position of the wire guide(s) relative to the coordinate origin are determined on the basis of the desired position of the UV axes determined from a preprogrammed cone angle.

15. Method according to Claim 13, characterised in that the rotation and the position of the wire guide relative to the coordinate origin are determined analogously to the desired position of the UV axes from the predetermined cone angle.

16. Method according to one of the Claims 13 - 15, characterised in that the wire guide is rotated about the eroding wire in incrementally restricted correction stages in order to avoid unnecessarily rapid rotary motions.

17. Method according to one of the Claims 13 - 16, characterised in that previously stored individual manufacturing and/or assembly parameters are incorporated in the computation of the rotation and the position of the wire guide relative to the coordinate origin.

18. Method according to one of the Claims 13 - 17, characterised in that an absolute measurement of the actual position of the wire guide(s) is carried out.

19. Method according to one of the Claims 13 - 18, characterised in that an electronic correction of positional errors occurring is carried out as a function of the profile of the guide.

20. Method according to one of the Claims 13 - 19, characterized in that the open wire guide is rotated during conical cutting in at least three different regions as follows:
a) in a first region (Zone Z1) only in incremental correction steps,
b) in a second region (Zone Z2) by an angle of about 90° to the axis of rotation, and
c) in a third region (Zone Z3) essentially towards the axis of rotation.

## Revendications

1. Dispositif pour le découpage par électro-érosion d'une pièce avec un fil d'érosion (1) guidé dans au moins deux guide-fils (3) déplaçables l'un par rapport à l'autre, ouverts et en forme de V, un guide-fil (3) étant disposé devant la pièce et l'autre guide-fil (3) derrière la pièce, vu dans le sens d'avancement du fil, au moins l'un des guide-fils (3) pouvant pivoter autour de l'axe longitudinal du fil d'érosion (1) et le fil d'érosion (1) étant guidé devant la pièce, en passant d'abord par une arrivée de courant (2), et ensuite, vu dans le sens d'avancement du fil, par un guide-fil (3) ouvert et en forme de V, caractérisé en ce qu'un guide auxiliaire (4) est prévu entre l'arrivée de courant (2) et le guide-fil (3) ouvert et en V.

2. Dispositif selon la revendication 1, caractérisé en ce que le guide-fil (3) et le guide auxiliaire (4) sont décalés l'un par rapport à l'autre dans le sens vertical et dans le sens horizontal.

3. Dispositif selon la revendication 1 ou 2, caractérisé en ce qu'au moins l'un des guide-fils (3;4) peut tourner du fait qu'il est disposé dans une tête d'usinage pivotante (5), en particulier une tête d'usinage cylindrique.

4. Dispositif selon l'une quelconque des revendications 1 à 3, caractérisé par au moins un entraînement par moteur (9) raccordé à un ordinateur de commande pour la rotation automatique du (des) guide-fil(s) (3) et de la tête d'usinage (5).

5. Dispositif selon la revendication 4, caractérisé par un capteur de position de fil raccordé à l'ordinateur de commande.

6. Dispositif selon l'une quelconque des revendications 1 à 5, caractérisé par au moins un dispositif d'enfilement (12) couplé au guide-fil pivotant avec un évidement (16) et une fermeture (17).

7. Dispositif selon l'une quelconque des revendications 1 à 6, caractérisé en ce que le contour de section du guide-fil (3) est progressivement courbé.

8. Dispositif selon l'une quelconque des revendications 1 à 7, caractérisé en ce que le dispositif d'enfilement (12) est couplé de façon fixe à une tête guide-fil (5) pivotante.

9. Dispositif selon la revendication 8, caractérisé en ce que le dispositif d'enfilement (12) présente une chambre de pression (15) fermant à clé.

10. Dispositif selon l'une quelconque des revendications 1 à 9, caractérisé en ce qu'un contour de section du guide-fil (3) varie.

11. Dispositif selon la revendication 10, caractérisé par une courbure parabolique du contour de section.

12. Dispositif selon la revendication 10, caractérisé en ce que le guide-fil (3) a une courbure à la façon de deux segments de cercle superposés avec des rayons différents.

13. Procédé pour le découpage par électro-érosion avec un fil d'érosion (1) guidé dans au moins deux guide-fils (3) ouverts et en V, avec lequel au moins l'un des guide-fils (3) est tourné pendant le découpage par érosion en fonction d'un contour à découper autour de l'axe longitudinal du fil d'érosion (1), caractérisé en ce que le au moins un guide-fil (3) pivotant et un guide auxiliaire (4) pivotant déplacé à cet effet pour la tête d'usinage (5) supérieure et inférieure avec des coupes cylindriques et coniques sont tournés de telle manière que la force avec laquelle le fil est maintenu dans le guide-fil (3) est maximale.

14. Procédé selon la revendication 13, caractérisé en ce que la rotation et la position du (des) guide-fil(s) par rapport au point d'origine des coordonnées sont calculées à l'aide de la position prescrite des axes UV calculée à partir d'un angle conique préprogrammé.

15. Procédé selon la revendication 13, caractérisé en ce que la rotation et la position du guide-fil par rapport au point d'origine des coordonnées sont calculées de la même manière que les positions prescrites des axes UV à partir de l'angle conique prédéfini.

16. Procédé selon l'une quelconque des revendications 13 à 15, caractérisé en ce que le guide-fil est tourné par étapes de correction limitées de façon incrémentielle autour du fil d'érosion afin d'éviter des mouvements de rotation inutilement rapides.

17. Procédé selon l'une quelconque des revendications 13 à 16, caractérisé en ce qu'on intègre dans le calcul de la rotation et de la position du guide-fil par rapport au point d'origine des coordonnées des paramètres de fabrication et/ou de montage individuels prémémorisés.

18. Procédé selon l'une quelconque des revendications 13 à 17, caractérisé en ce qu'une mesure absolue de la position réelle du (des) guide-fil(s) est effectuée.

19. Procédé selon l'une quelconque des revendications 13 à 18, caractérisé en ce qu'une correction électronique d'erreurs de position apparaissant est effectuée en fonction du profil du guide.

20. Procédé selon l'une quelconque des revendications 13 à 19, caractérisé en ce que le guide-fil ouvert est tourné lors du coupage conique dans au mois trois zones différentes de la façon suivante :
a) dans une première zone (ZONE Z1) seulement par étapes de correction incrémentielles,
b) dans une deuxième zone (ZONE Z2) d'un angle d'environ 90° par rapport à l'axe de rotation et
c) dans une troisième zone (ZONE Z3) sensiblement vers l'axe de rotation.
